# EUROPEAN PATENT SPECIFICATION

(11) **EP 1 726 691 B1**
(45) Date of publication and mention of the grant of the patent: **14.01.2009**
(21) Application number: 06015739.3
(22) Date of filing: 25.01.2003
(51) Int. Cl.: D01F 11/04, D01F 6/60, D02G 3/48, C08J 5/06

(54) **Cord made from a multiflament aramid cord with high fatigue resistance**
Cord hergestellt aus einem Multifilament-Aramidgarn mit hoher Ermüdungsfestigkeit
Cord produit d'un fil d'aramide multifilamentaire avec haute résistance à la fatigue

(30) Priority: 02.02.2002 EP 02002489
(43) Date of publication of application: 29.11.2006
(62) Divisional of application: 03702530.1
(73) Proprietor: Teijin Aramid B.V., 6827 AV Arnhem (NL)
(72) Inventor: Otto, Marcin Jan, 6662 HP Elst (NL); Lange De, Pieter J., 6932 KL Westervoort (NL)
(74) Representative: Heimann, Anette

(56) References cited:
- EP-A- 0 107 887
- US-A- 4 259 404
- US-A- 5 080 159

## Description

The invention pertains to a multifilament aramid cord with high fatigue resistance and a fiber reinforced object comprising said cord, which cord is obtained by a method for obtaining a yarn with high fatigue resistance.

For yarns to be used as reinforcing material for rubber or synthetic materials they must generally be provided with a special coating which serves to ensure a satisfactory bond between the yarn and the object to be reinforced. This is of particular interest for making tires including one or more plies of carcass layers comprising a number of cords. To that end the conventional polyamide and rayon yarns, which are generally in the form of cord, are treated with a resorcinol-formaldehyde-latex mixture (RFL dip) and subsequently cured for a while. With yarns of other materials, such as polyesters and aromatic polyamides, the above treatment does not lead to the degree of adhesion required and use must be made then of a two-step dipping system. Thus, in the process of improving their adhesion properties cords of poly-p-phenylene terephthalamide are pre-dipped in a first bath to provide them with a sub-coating of, for instance, an epoxy compound, which is cured at elevated temperature. In a second bath the cured sub-coating is provided with a layer of said resorcinol-formaldehyde-latex mixture, which is in its turn cured at elevated temperature. A process of the above type is known from U.S. patents 3,869,429 and 4,259,404. The above-mentioned two-step dipping process has disadvantages. As this process cannot be carried out on the conventional one-dip equipment in use in yarn processing plants, processors of traditional yarns, such as rayon and nylon, who want to change over to yarns of poly-p-phenylene terephthalamide, will have to go to additional capital expenditure on dipping equipment or subcontract the process to converters.
In US 5,080,159 a tire was provided with a carcass structure by developing a cord treatment, which enables penetration of adhesives between fiber filaments. This treatment was used for eliminating separation problems between carcass cords and covering rubber. In other words, this prior art invention relates to an improved method for penetration and impregnation of adhesive agent between fiber filaments of cords, thereby improving the adhesion between cord and covering rubber. The best results were obtained with a double treatment with epoxy agent and RFL. Thus a process (embodiment 1) wherein the yarns were dipped in the epoxy treating agent in a bath and dried, followed by dipping in the RFL treating agent, twisting these yarns to a cord, and then repeating the two dipping steps on the cord structure with epoxy agent and RFL, respectively, leads to a substantial improvement with respect to the adhesion properties of the cord with the covering rubber. In another embodiment 2 the RFL dipping step on the yarns was deleted, whereas the cord was still subjected to the double epoxy agent/RFL treatments. The adhesion properties of these treated cords to covering rubber were less favorable, although still better that convention singly treated materials. Further, the dipping methods of this US patent are performed in an off-line process.

In EP 107,887 a method was proposed for obtaining a cord made of a multifilament aramid yarn obtained by the steps comprising:
a) spinning a solution of an aromatic polyamide into a coagulation bath;
b) optionally neutralizing and washing the resulting multifilament yarn;
c) treating the yarn with a curable epoxy compound, optionally together with or followed by treating the yarn with at least one alkaline curing agent; and
d) obtaining the yarn having a free epoxide content of not more than 10 mmoles/kg;
e) converting the yarn to a cord;
g) treating the cord with a coating which is adhesive to rubber and rubber-like materials and different from the curable epoxy compound.
The above-mentioned cord can easily be made and has the advantage that only a RFL dip (or the like) is required (usually performed at the converter) ensuring good adhesion to rubber and rubber-like materials. This method could be performed as an off-line or on-line process. A further dip with curable epoxy compound before the RFL dip, as is usual in the prior art yarns, is redundant and was not longer applied when using the yarns of EP 107,887.

Surprisingly, it has now been found that when this apparently redundant epoxy compound dip is re-introduced, a substantial improvement is obtained for the fatigue resistance. Although the advantage of the one-dip process of EP 107,887 is thereby lost, the advantage of the improvement of the fatigue resistance outweighs this previous advantage when the cord is used in applications where high fatigue resistance is of importance, such as in the use for making carcasses for car tires. Such improvement was neither disclosed in the on-line and off-line processes of EP 107,887, nor in the off-line process of US 5,080,159. Surprisingly, it was also found that a further improvement of the fatigue resistance was obtained when the method is performed on-line. Preferably, the on-line method is performed without the use of alkaline reagents and catalysts. Contrary to the method of US 5,080,159 wherein dried aramid yarns are subjected to the epoxy agent treatment, the on-line method implies the use of spun yarn that undergoes an epoxy treatment, without drying the yarns before said treatment.

An aramid cord with high fatigue resistance made from multifilament aramid yarn, obtained by the steps comprising:
a) spinning a solution of an aromatic polyamide into a coagulation bath;
b) optionally neutralizing and washing the resulting multifilament yarn;
c) treating the yarn on-line with a curable epoxy compound, optionally together with or followed by treating the yarn with at least one alkaline curing agent;
d) obtaining the yarn having a free epoxide content of not more than 10 mmoles/kg;
e) converting the yarn to the cord, wherein the cord is obtained by twisting together bundles of the yarn, which all entirely consist of the yarn of step d);
f) treating the cord with a curable epoxy compound; followed by
g) treating the cord with a coating which is adhesive to rubber and rubber-like materials and different from the curable epoxy compound.

The other conditions when making these yarns are to be found in EP 107,887. Thus the multifilament yarn of this type has a free epoxide content not higher than 10 mmoles/kg. It is preferred that the free epoxide content should not be higher than 5 mmoles/kg, more particularly not higher than 2 mmoles/kg. The term free epoxide as used in the context of this invention refers to extractable free epoxide.

The aromatic polyamides as used in the invention are polyamides that comprise repeating units selected of the general formula:

-CO-Ph-CO-,

wherein Ph represents a para-phenylene group.

It is preferred that the yarn as used in the invention should comprise poly-p-phenylene terephthalamide. Examples of such yarns are commercially available under the tradenames of Twaron® and Kevlar®. Copolymers such as Technora® (which comprises amounts of naphthalenic units) may also be used. The yarn as used in the invention may be twisted or not. It is preferred that it should entirely or practically entirely be non-twisted.

The yarn as used in the invention is provided with an adhesive coating, which consists of a cured epoxy compound.
The epoxy compound as used in the invention has an average 1 to 7 epoxy groups per molecule, preferably about 2 to 5, and is applied to the yarn as an aqueous solution or dispersion or as an organic solution or dispersion which preferably contains 0.3 to 10% by weight of the epoxy compound. The amount of the epoxy compound in the solution or dispersion is so chosen that it has the desired viscosity and so that the desired amount of the epoxy compound is taken up by the yarn. After having been applied to the yarn, the epoxy compound is cured, so that a practically water-insoluble adhesive coating is formed having the desired adhesive properties. The amount of cured epoxy compound present on the yarn is 0.01-5% by weight and preferably 0.03 to 1.0% by weight. Examples of suitable epoxy compounds are described in US patent 4,259,404. Also mixtures of epoxy compounds may be used.

The adhesive layer may consist of the cured product of a mixture containing an epoxy compound and at least one alkaline curing agent in the presence or absence of one or more catalysts. The epoxy compound to be used is preferably a glycidyl ether of a polyvalent aliphatic alcohol, such as butanediol, propanediol, ethylene glycol, glycerol, and polyglycerol, and mixtures thereof. Particularly preferred are a di- and/or triglycidyl ether of glycerol and a polyglycidyl ether of polyglycerol.
Alkaline curing agents that can be used in the invention are for instance heterocyclic amines. Particularly suitable is piperazine 6 aq. The amine is used in an amount of about 1 to 100%, preferably 5 to 25%, calculated on the weight of the glycidyl or polyglycidyl ether. More specific examples are mixtures containing the di- and/or triglycidyl ether of glycerol or polyglycidyl ether of polyglycerol, piperazine, imidazole, and ethylene glycol. The amount of the imidazole to be contained in such a mixture is in the range of 1 to 100%, preferably 10 to 40%, calculated on the weight of the di- and/or polyglycidyl ether.

According to the invention the cord undergoes a second epoxy compound treatment after the yarn has been converted to the core. This treatment can be the same or different as the first epoxy compound treatment. The epoxy compounds that can be used are the same as used in the first epoxy compound treatment.

Examples of suitable catalysts are dicyanodiamide, borontrifluoride, tetramethylethylenediamine, tetramethylbutanediamine, and 2,4,6-tris(dimethylaminomethyl)-phenol.
The last-mentioned substance, which is preferably used, is commercially available under the name Epilink® 230 and Ankamine® K54. The catalyst is used in an amount of 1 to 100%, preferably 5 to 25%, calculated on the weight of the glycidyl ether.

In another embodiment this disclosure pertains to the use of a cord made of a multifilament aramid yarn by the steps:
a) spinning a solution of an aromatic polyamide into a coagulation bath;
b) optionally neutralizing and washing the resulting multifilament yarn;
c) treating the yarn with a curable epoxy compound, optionally together with or followed by treating the yarn with at least one alkaline curing agent;
d) obtaining the yarn having a free epoxide content of not more than 10 mmoles/kg; e) converting the yarn to a cord;
f) treating the cord with a curable epoxy compound;
g) treating the cord with a coating which is adhesive to rubber and rubber-like materials and different from the curable epoxy compound,
for making a tire carcass of improved fatigue resistance.
Such use for improving the fatigue resistance is not known from US 5,080,159,
wherein only the improved adhesion properties are mentioned.

The multifilament yarn as used in the invention may have any linear density and be composed of any number of endless (continuous) filaments commonly used in actual practice. As a rule, the yarn will have a linear density in the range of dtex 10 to dtex 5000 and be composed of 10 to 5000 filaments. The yarn as used in the invention has good mechanical properties. The tenacity is 10 to 35 cN/dtex or higher, preferably 15 to 25 cN/dtex. The elongation at rupture is 1 to 10%, preferably 2 to 8%. The initial modulus is 200 to 1300 cN/dtex or higher, preferably 300 to 900 cN/dtex. The yarn as used in the invention has a low free epoxide content. It is preferred that the free epoxide content should be lower than 2 mmoles of epoxide per kg of yarn. This low free epoxide content makes it possible to produce and to process the yarn without any risk to the health of plant operators.

The yarn as used in the invention has a low free epoxide content already immediately after it has been produced. In the course of time the free epoxide content generally continues to decrease. The low free epoxide content of the yarn as used in the invention is obtained by the use of special processes as will be further described hereinafter.

An important property of the yarn as used in the invention is that a cord made from it displays an improved RFL dip pickup. For a proper cord to rubber adhesion a sufficiently high RFL dip pickup is required. This may be realized according to the invention by applying and curing the epoxy compound while the yarn is entirely or practically entirely free of twist, which may for instance be a twist of fewer than 10 turns per meter. The yarn thus treated may subsequently be twisted. If the curable epoxy compound is applied to a highly twisted yarn, as described in Example VI of US patent 3,869,429, or to a tire cord, as described in the examples given in US patent 4,259,404, then the product obtained will have a lower RFL dip pickup. The improved RFL dip pickup of the yarn as used in the invention results in a more effective penetration into the yarn of the RFL dip. This leads to improved service properties when the product is used as reinforcing material in rubber or synthetic materials, particularly when a high fatigue resistance is required.

The yarn as used in the invention being more readily accessible to RFL dip is bound up with the magnitude of the stiffness number of the yarn, as explained in EP 107,887.

In addition to the cured epoxy compound the yarns as used in the invention may contain one or more of the usual finishes. It has been found that when the cord made from it is used as a reinforcing material for rubber, particularly 0.1-5% by weight of one or more polyglycol esters of one or more fatty acids is preferred. More preferably, the yarn should contain 0.3-1.0% by weight of a finish.

The yarn as used in the invention may be wound into a yarn package while in a twistless or practically twistless state. The resulting yarn packages are particularly suitable to be used as starting material in the manufacture of cords to be employed as reinforcing elements for rubber or synthetic materials. Optionally, the yarn as used in the invention may be twisted before it is wound into a package.

The yarn as used in the invention is also suitable to be processed into a reinforcing cord. This cord may be obtained by twisting together one or more bundles of multifilament yarn, of which bundles at least one entirely or partly consists of the filament yarn as used in the invention. In one embodiment of the invention, by twisting together bundles of multifilament yarn, which all entirely consist of the yarn as used in the invention, the cord is made. In some other embodiment of the invention at least one of the bundles in the cord entirely or partly consists of a polyester multifilament yarn provided with an adhesive coating. A polyester yarn thus pretreated is described in US patent 3,383,242.

The yarn as used in the invention provided with a cured epoxy coating or a cord made thereof, as described hereinbefore, has the advantage that if desired it might be incorporated as reinforcing material into the so-called self-adhering rubbers.

The yarn as used in the invention as such, or processed into a cord according to the invention, or thereafter into a fabric, may be used as reinforcing material for synthetic and natural polymers displaying a rubber-like behavior and for other synthetic materials, among which thermoplastics and thermosetting plastics.

Examples of these materials include natural rubber, polybutadiene, polyisopropylene, poly(butadiene-styrene), poly(butadiene-acrylonitrile), poly(ethylene-propylene), poly(isobutene-isoprene), polychloroprene, polyacrylate, polyurethanes, polysulfides, silicones, polyvinyl chloride, polyetheresters, polymerized unsaturated polyesters and epoxy resins.

For the manufacture of the yarn as used in the invention various methods may be used. These methods also form part of the disclosure. For instance, in fully continuous operation and directly coupled to the spinning process of the starting yarn a curable epoxy compound and optionally one or more curing agents may be applied to the twistless yarn, followed by drying and/or curing of the epoxy compound. In a different embodiment the treatment of a twistless or practically twistless starting yarn with the curable epoxy compound is a separate continuous or discontinuous operation, which is not integrated with the spinning process.

In all cases during curing the yarn tension is preferably above 5 mN/tex. The preparation of aromatic polyamides and the spinning thereof are described in Kirk-Othmer, Encyclopedia of Chemical Technology, 3rd Ed., Vol. 3 (1978), pp. 213-242. A particularly suitable method of wet spinning poly-p-phenylene terephthalamide into multifilament yarns is published in US patent 4,320,081.

If coupled to a wet spinning process, the application of the curable epoxy compound may be effected during or between different process steps following the washing of the spun yarn. In a preferred procedure the epoxy compound and the appropriate curing agent are applied to the washed, not-dried yarn. It is preferred that use should be made of a dilute aqueous mixture (over 90% by weight of water) of the epoxy compound and optionally one or more alkaline curing agents. The yarn thus treated is subsequently dried and optionally subjected to some special curing treatment, after which it is treated again with the epoxy compound, followed by treatment with a coating which is adhesive to rubber and rubber-like materials and different from the curable epoxy compound, and optionally wound into a package. By applying the first epoxy compound to the yarn when it is still wet and has not yet been dried beforehand, a yarn having a very low free epoxide content is obtained after a relatively short drying and/or curing treatment at a temperature not higher than 300°C. It is preferred that the curable epoxy compound should entirely or mainly consist of the di- and/or triglycidyl ether of glycerol or the polyglycidyl ether of polyglycerol. After applying the mixture of epoxy compound and optionally curing agent the yarn is preferably dried at a temperature of 130-250°C, and subsequently subjected to a curing treatment at a temperature of 150-300°C.

For drying and curing use is made of conventional methods and equipment, such as hot drums, hot plates, hot rolls, hot gases, steam boxes, infrared heaters and the like. Preferably, neither the drying treatment nor the curing treatment should last longer than 10 seconds.

The above-described fully continuous process, in which the spinning of the yarn is combined with applying the epoxy compound to the wet yarn, may be carried out at yarn speeds, which are commonly used in the spinning of poly-p-phenylene terephthalamide. Generally, the yarn passes through the successive process steps at a speed higher than 200 m/min, preferably higher than 300 m/min. The epoxy compound also may be applied to the yarn after it has been dried. This operation may be carried out in combination with the spinning process or separately. It has been found that also by that route, provided that proper conditions are used, a yarn is obtained which when in the freshly produced state has a sufficiently low content of free epoxide. A low free epoxide content is obtained by treating the yarn at elevated temperature. For reasons of economy and the possibly detrimental effect on the yarn properties, however, such a treatment is considered unattractive. It has been found that a product having a low free epoxide content is obtained by applying to a twistless or practically twistless, dried, poly-p-phenylene terephthalamide yarn the curable epoxy compound and optionally subjecting the yarn thus treated to a curing treatment for 1 to 25 seconds at a temperature of 180 to 230°C. The amount of di- and/or triglycidyl or polyglycidyl ether to be applied to the yarn is 0.01-5% by weight, preferably 0.03-1.0% by weight, calculated on the dry yarn.

When curing agents are used, the epoxy compound and the curing agent can not only applied to the yarn as a mixture but also separately, either before or after the drying treatment. Thus, an epoxy compound (without curing agent) may be applied to non-dried yarn, which is subsequently dried, after which the epoxy compound is cured with a Lewis acid, for instance an etherate of BF₃, at room temperature. For further improvement of the adhesion of the product it may, after the curing treatment, be provided with 0.1 to 5.0% by weight, preferably 0.4-1.0% by weight, of a finish. A preferred finish is Leomin® OR or Afilan® PTU.

In addition a finish may be applied to the yarn in some stage of the process, for instance immediately before or after drying and simultaneously with or separately from the application of the epoxy compound. The epoxy compound, curing agents, catalyst, and finish to be used are applied with the aid of known liquid applicators. To that end use may be made of a kiss-roll of which the surface that comes into contact with the yarn moves to the same direction as or in opposite direction of the yarn. The kiss-roll is wetted in the usual way with the liquid to be applied, for instance in that the rotating kiss-roll is partially immersed in the liquid. Alternatively, the process can also be performed with a slit applicator.

The yarn as used in the invention may be provided with the usual aids, such as surface-active substances, antistatic substances and other commonly used finish constituents. The processes as used in the invention permit the rapid manufacture with simple means of yarn packages of pretreated multifilament yarn from poly-p-phenylene terephthalamide, which does not contain free epoxy compounds in an amount detrimental to human health, and which results, either without any further dipping treatment or after a one-step dipping treatment, in a reinforcing material displaying favorable adhesion and fatigue behavior.

The free epoxide content of the yarn is in principle determined as follows. Of the yarn 5-10 g are extracted for 2 hours with dichloromethane in a Soxhlet extractor.

Alternatively, an accelerated solvent extractor may be used (e.g. Dionex ASE 200). The extract is evaporated to 5-10 ml in a rotating vacuum evaporator at room temperature or in a sample concentrator (Techne DB-3D). After extraction addition of a particular amount of dichloromethane the epoxide content is determined as follows: the solution is allowed to react for 10 minutes at room temperature with a solution of 2,4-dinitrobenzene sulfonic acid in dioxane. Subsequently, the solution is rendered alkaline with tetrabutyl ammonium hydroxide and made up to volume with dichloromethane. The resulting orange color is measured spectrophotometrically at 498 nm in a time scan.

As agents are used:
a. dichloromethane;
b. 2,4-dinitrobenzenesulfonic acid (e.g. ex Aldrich), 0.5% (m/v) in dioxane;
c. tetrabutyl ammonium hydroxide, 0.1 mole/l in 2-propanol (e.g. ex Merck).

The procedure for determining the free epoxide content of the yarn of the invention is as follows:
a. Weighing into an extraction tube about 5-10 g of yarn to the nearest 1 mg (p grams);
b. Extracting in a Soxhlet apparatus for 2 hours with dichloromethane or in an accelerated solvent extractor for 5 min (static extraction time) at 90°C;
c. Evaporating the dichloromethane extract to a volume of 5010 ml at room temperature with the aid of a rotating vacuum evaporator a sample concentrator;
d. Transferring the extract quantitatively into a 50 ml volumetric flask, making up to volume with dichloromethane and homogenize the solution;
e. Pipetting 5 ml of the sample solution into a 25 ml volumetric flask;
f. Adding by pipette 2 ml of 2,4-dinitrobenzene sulfonic acid solution and mixing intensely. Waiting for 10 min;
g. Adding by pipette 6 ml of tetrabutyl ammonium hydroxide solution, making up to volume with dichloromethane and homogenizing the solution;
h. Measuring the absorbance for at least 250 sec at 498 nm against air as reference;
i. Recording the maximum absorbance (E1)
j. Performing a blank determination in the same way, using a sample that does not contain any free epoxide (E0);
k. Reading from the calibration graph constructed as described below the amount of epoxy groups (q moles) corresponding to E1 -E0.

The calibration graph is obtained as follows:
l. Preparing a standard solution of the di- and/or triglycidyl ether of glycerol or the polyglycidyl ether of polyglycerol, using the following procedure: dissolve about 200 mg of a commercial product, e.g. GE 100®(ex Raschig GmbH) in dichloromethane in a 100 ml volumetric flask and making up the volume with dichloromethane. Homogenizing the solution. Pipetting 1 ml of this solution into a 50 ml volumetric flask, making up to volume with dichloromethane and homogenizing the solution. The exact concentration is calculated via determination of the content of the commercial product used (e.g., GE 100®), as further described hereinafter.
m. Pipetting 1 ml of the epoxide standard solution into a 25 ml volumetric flask;
n. Adding by pipette 2 ml of 2,4-dinitrobenzene sulfonic acid solution and mixing intensely. Waiting for 10 min;
o. Adding by pipette 6 ml of tetrabutyl ammonium hydroxide solution, making up to volume with dichloromethane and homogenizing the solution;
p. Measuring the absorbance for at least 250 sec at 498 nm against air as reference;
q. Recording the maximum absorbance;
r. Repeating these steps with 0, 2, 4, 8, and 10 ml of epoxide standard solution;
s. Plotting in a graph the epoxide concentration (in □mol/25 ml) against the respective absorbance values.

The determination of the epoxide content of the commercial product (e.g. GE100® of Raschig GmbH) used for the preparation of the standard solution is carried out as follows:
t. Weighing about 250 mg of the commercial product (a grams), dissolving in glacial acetic acid and making up to 100 ml with glacial acetic acid in a 100 ml volumetric flask;
u. Pipetting 25 ml of this solution into a 100-ml beaker and adding by pipette 25 ml of cetyl trimethyl ammonium bromide reagent (16 g in 200 ml of glacial acetic acid);
v. Potentiometrically titrating with perchloric acid in glacial acetic acid (0.1 mole/I = t) to the equivalence point (v1 ml);
w. Running a blank-titration with the chemicals used (vo ml)

The commercial product then contains:
4(v1-v0)t/a mmoles of epoxide/gram
(in constructing the calibration graph for the determinations that were carried out within the scope of the Examples of the present invention, use was made of a commercial product GE100, ex Rasching GmbH, containing 6.7 mmoles of epoxy/gram).

The free epoxide content of the yarn is:
q/p mmoles of epoxide/kg yarn
wherein q = □moles/25 ml of free epoxide in the sample solution found from the calibaration graph,
p = grams of yarn weighed in before the extraction.

The linear density of a fiber sample is determined by weighing a sample of a particular length (100 cm under a tension of 0.1 cN/dtex). The density of yarn and cord samples is measured in a density-gradient tube at 23°C.
The disc fatigue of the cords in textile rubber (Dunlop® 5320) due to compression and/or extension is determined in accordance with the Disc fatigue test method described in ASTM D885-62T. Two experiments were carried out, with compression/extension settings of -18/+0% and -5/+10%, respectively, the number of cycles being 860,000 in both cases. The retained strength of the cord was determined, and expressed as percentage of the retained strength of a cord from standard yarn (yarn "A", see Example) after a two-bath dipping.
In addition, the Compression-Flex-Fatigue (C FF) was determined. In this test a 25 mm wide rubber strip (Dunlop® 5320) containing two cord layers was flexed over a spindle (diameter 25 mm) at a load of 340 N. The thicknesses of the bottom rubber layer (facing the spindle), the rubber layer between the cord-layers, and the top rubber layer were 1 mm, 1 mm, and 2 mm, respectively. The upper cord-layer contained high modulus fiber material, the bottom cord-layer contained 8 cords to be tested. During flexing (at 5.2 Hz) the high modulus cord-layer carried practically the full tensile load. The test-cords in the bottom-layer experienced bending, axial compression (deformation), and lateral stress (pressure) of the upper cord layer. The decrease in strength is caused by bending and axial compression in the presence of lateral pressure. After the strip was flexed (2 hours, meaning 37,500 cycles), the cords were prepared out of the strip by cutting and gentle pulling. The retained strength of 6 out of the 8 cords (discarding the outer 2), in comparison to cord from an untested strip, was determined using capstan clamps. Results are expressed as a percentage of the retained strength of a cord from standard yarn (yarn "A", see Example) after a two-bath dipping.
The adhesion of the cords to rubber (Dunlop® 5320) is determined in accordance with the Strap Peel (SP) Adhesion test method described in ASTM D4393-94. The results are expressed as a percentage of the adhesion of a cord from standard yarn (yarn "A", see Example) after a two-bath dipping.

The invention will be further described in the following example.

### Example I

Three yarns (A, B, and C) of poly-p-phenylene terephthalamide each having a linear density of dtex 1680 and being composed of 1000 filaments were made as follows.
A. A spinning mass was prepared by mixing concentrated (99.8 wt.%) sulfuric acid snow with powdered poly-p-phenylene terephthalamide having a relative viscosity of 5.2. The relative viscosity was calculated by measuring the flow time of a sample solution in 96 wt.% sulfuric acid at 25°C in an Ubbelohde viscometer. Under identical conditions the flow time of the solvent is measured as well. The ratio between the two observed flow times results in the relative viscosity. The spinning mass contained 19.0% by weight of poly-p-phenylene terephthalamide.
   The spinning mass was deaerated, heated to 90°C in a single-screw extruder and fed to a spinneret via a filter and a spinning pump. The spinneret had 1000 spinning orifices of 60 µm in diameter.
   The spinning mass was extruded through the spinning orifices and thereafter successively passed through an air zone of 8 mm in length and a coagulation bath. This bath was a dilute solution of sulfuric acid in water (about 5% by weight) having a temperature of about 10°C. The filament bundle thus formed successively passed through a neutralization bath containing a dilute sodium hydroxide solution and a washing bath in which the filaments were thoroughly washed with water of about 75°C. Excess adhering water was removed with the aid of a squeeze roller pair.
   The non-dried bundle of filaments subsequently passed over a rotating kiss-roll, which was partially immersed in an epoxy-free watery finish mixture. From this the yarn picked up 0.4 wt% (on yarn, excluding water) of this finish mixture, mentioned in Table II under a. Next, the yarn was passed over a series of four drying drums at a temperature of 195°C. The yarn was in contact with the surface of the drums for 1 sec. Subsequently, the yarn was passed over a series of eight curing drums (contact time 2 sec) at a temperature of 205°C. Next, the yarn was provided with 0.4 wt% (on yarn) Leomin OR® as after-finish with the aid of a slit applicator and a feed pump. Subsequently the yarn was wound into a package at a speed of 375 m/min.
B. A yarn was spun and washed in the same way. The non-dried bundle of filaments subsequently passed over a rotating kiss-roll, which was partially immersed in an epoxy-free watery finish mixture. But now the yarn picked up 0.14 wt.% (on yarn, excluding water) of this finish mixture, mentioned in Table II under a. Next, the yarn was passed over a series of four drying drums at a temperature of about 195°C. The yarn was in contact with the surface of the drums for 1 sec. Subsequently, the yarn was passed over a series of eight curing drums (contact time 2 sec) at a temperature of about 205°C. Next, the yarn was wound into a package at a speed of 375 m/min. The resulting dry, twistless yarn was subjected to the following treatments. The yarn package was rollingly unwound while successively passing the yarn over a rotating kiss-roll, through a steam box (temperature 250°C, residence time 12 sec), passing a liquid applicator and finally wound. With the kiss role the yarn was coated with an epoxy containing finish mixture whose composition is mentioned in Table II under b, resulting in a coating of 0.6 wt.% (on yarn, excluding water). With the liquid applicator the yarn was provided with 0.6 wt.% (on yarn) of LW 245® as after oil (LW 245® consists of 2-ethylhexyl stearate and is supplied by Cognis).
C. A yarn was spun and washed in the same way. But now the non-dried bundle of filaments subsequently passed through a first slit applicator, feeding by using a pump an epoxy-containing finish mixture. From this the yarn picked up 0.4 wt.% (on yarn, excluding water) of this finish mixture, mentioned in Table II under c. Next, the yarn was passed over a series of four drying drums at a temperature of 195°C. The yarn was in contact with the surface of the drums for 1 sec. Subsequently, the yarn was passed over a series of eight curing drums (contact time 2 sec) at a temperature of 205°C. Next, the yarn was provided with 0.5 wt.% (on yarn) LW 245® as after-finish with the aid of a slit applicator and a feed pump. Subsequently the yarn was wound into a package at a speed of 375 m/min.

The yarns A, B, and C were further processed by twisting two filament bundles of each of these yarns to 330 turns/m and combining the resulted bundles into a cord having a twist which was equal to but in opposite direction to that of the bundle. Thus of the yarns A, B, and C cords with the construction dtex 1680 x 2 (330/330) were obtained.
The cords were treated in a two-bath dipping process and in a one-bath dipping process. The procedure for the two-bath dipping process is as follows. The cord to be treated was fed to a first bath filled with an aqueous dip solution comprising an epoxy compound. After emerging from the dip bath the cord, while maintaining under a tension of 9N, passed through two ovens. In the first oven, the dipped cord was heated for 120 sec at 150°C. In the second oven the dipped cord was heated for 90 sec at 240°C. The composition of the aqueous epoxy containing dip solution is as follows (amounts in wt.%).

| | |
|---|---|
| Demineralized water | 97.82 |
| Piperazine (anhydrous) | 0.05 |
| Dioctyl sodium sulfosuccinate 75% | 0.13 |
| Di/tri-glycidylether of glycerol* | 2.00 |

| | |
|---|---|
| * GE 100®, ex Rasching | |

Subsequently, the cord was fed to a trough a second bath filled with an aqueous dip solution containing a resorcinol-formaldehyde-latex (RFL). After emerging from the dip bath the cord, while under a tension of 9 N, passed through a third oven where it was heated for 90 sec at 235°C and was finally wound on a bobbin.
The composition of the aqueous RFL dip solution, which contained 25% by weight of solid matter is as follows (amounts in wt.%):

| | |
|---|---|
| Demineralized water | 38.59 |
| Ammonium hydroxide (25%) | 1.29 |
| Pre-condensed RF resin (50%) (Penacolite R50, ex Indspec Chem. Corp.) | 6.94 |
| Vinyl pyridine latex (40%) (Pilocord VP 106, ex Goodyear Chem.) | 50.87 |
| Formaldehyde (37%) | 2.31 |

The procedure for the one-bath dipping process is as follows:
The cord to be treated was fed to a first bath filled with an aqueous dip solution comprising resorcinol-formaldehyde-latex (RFL). After emerging from the dip bath the cord, while maintaining under a tension of 9N, passed through two ovens. In the first oven, the dipped cord was heated for 120 sec at 150°C. In the second oven the dipped cord was heated for 90 sec at 230°C. Subsequently, the treated cord was wound on a bobbin The composition of the aqueous RFL-containing dip solution which contained 20% by weight of solid matter, is as follows (amounts in wt.%).

| | |
|---|---|
| Demineralized water | 50.86 |
| Ammonium hydroxide (25%) | 1.03 |
| Pre-condensed RF resin (50%) | 5.56 |
| Vinyl pyridine latex (40%) | 40.70 |
| Formaldehyde (37%) | 1.85 |

The properties of the cords made from yarn A, B, and C, after this two-bath dipping procedure, are summarized in Table I.

**TABLE I**

| Yarn | A | B | C |
|---|---|---|---|
| Composition of the finish mixture | a | a / b | c |
| Amount of this mixture on yarn (wt%, after drying) | 0.4 | 0.14/0.6 | 0.4 |
| Cord from yarn, after two-bath dipping (epoxy-containing dip + RFL dip) | | | |
| GB Fatigue (relative to A, %) | 100 | 118 | 135 |
| AF Fatigue (relative to A, %) | 100 | 116 | 127 |
| SPAF adhesion (relative to A, %) | 100 | 95 | 100 |
| Cord from yarn, after single-bath dipping (only RFL dip) | | | |
| GB Fatigue (relative to A, %) | 100* | 99 | 102 |
| AF Fatigue (relative to A, %) | 100* | 102 | 105 |
| SPAF adhesion (relative to A, %) | 100* | 91 | 90 |

| | | | |
|---|---|---|---|
| a = finish; b = epoxy compound; c = epoxy compound (see Table II) A = standard yarn; B = yarn according to EP 107,887 (off-line); C = yarn according to EP 107,887 (on-line) * Standard yarn has obtained a two-bath dip. | | | |

The compositions a, b, and c of the applied mixtures in percentages by weight are given in Table II.

**TABLE II**

| Composition | a | b | c |
|---|---|---|---|
| Polygycidylether of polyglycerol (Denacol® EX 521 supplied by Nagase) | | | 1.5 |
| Di/tri-glycidylether of glycerol (GE 100® supplied by Raschig) | | 1.17 | |
| Piperazine 6 aq. | | 0.13 | |
| Ankamine® K 54* | | 0.13 | |
| Afilan PTU® ** | | | 4.5 |
| Leomin OR® *** | 2.5 | 1.3 | |
| Dimineralized water | 97.5 | 97.27 | 94 |

| | | | |
|---|---|---|---|
| * Ankamine® K 54 is a catalyst supplied by Air Products and consists of a technically pure 2,4,6-tris-(dimethylaminomethyl)phenol. ** Afilan PTU® is a finish marketed by Clariant, comprising an end-capped fatty acid oxalkylate; ***Leomin OR® is a finish marketed by Clariant, comprising fatty acid polyglycol esters. | | | |

Table I shows that yarns B and C after a single-bath dip have the similar properties with regard to fatigue resistance as standard yarn, and a16-18% higher fatigue resistance after a two-bath dip. The on-line yarn C even showed a 27 to 35% higher fatigue resistance with regard to standard yarn. The adhesive properties of yarns B and C are not negatively influenced.

## Claims

1. An aramid cord with high fatigue resistance made from multifilament aramid yarn, obtained by the steps comprising:
a) spinning a solution of an aromatic polyamide into a coagulation bath;
b) optionally neutralizing and washing the resulting multifilament yarn;
c) treating the yarn on-line with a curable epoxy compound, optionally together with or followed by treating the yarn with at least one alkaline curing agent;
d) obtaining the yarn having a free epoxide content of not more than 10 mmoles/kg;
e) converting the yarn to the cord, wherein the cord is obtained by twisting together bundles of the yarn, which all entirely consist of the yarn of step d);
f) treating the cord with a curable epoxy compound; followed by
g) treating the cord with a coating which is adhesive to rubber and rubber-like materials and different from the curable epoxy compound.

2. The aramid cord of claim 1 wherein the curable epoxy compound comprises di- and/or triglycidyl ether of glycerol or the polyglycidyl ether of polyglycerol.

3. The aramid cord of claim 1 or 2 wherein the coating that is adhesive to rubber and rubber-like materials and different from the curable epoxy compound, is a recorcinol-formaldehyde-latex (RFL) coating.

4. A fiber reinforced object comprising the cord of any one of claims 1-3.

5. The fiber reinforced object of claim 4 wherein the object is a tire.

## Patentansprüche

1. Aus Multifilament-Aramidgarn hergestellter Aramidcord mit hohem Ermüdungswiderstand, der durch die folgenden Schritte erhalten wird:
a) Spinnen einer Lösung eines aromatischen Polyamids in ein Fällbad;
b) gegebenenfalls Neutralisieren und Waschen des entstandenen Multifilamentgarns;
c) On-line-Behandeln des Garns mit einer aushärtbaren Epoxidverbindung, gegebenenfalls zusammen mit oder gefolgt von einer Behandlung des Garns mit mindestens einem alkalischen Härtungsmittel;
d) Erhalten des Garns mit einem Gehalt an freien Epoxiden von nicht mehr als 10 mmol/kg;
e) Verarbeiten des Garns zu einem Cord, wobei der Cord durch Verzwirnen von Bündeln des Garns erhalten wird, die alle vollständig aus dem Garn von Schritt d) bestehen;
f) Behandeln des Cords mit einer aushärtbaren Epoxidverbindung, gefolgt vom
g) Behandeln des Cords mit einer an Gummi und gummiartigen Materialien haftenden Beschichtung, die sich von der aushärtbaren Epoxidverbindung unterscheidet.

2. Aramidcord nach Anspruch 1, bei dem die aushärtbare Epoxidverbindung Di- und/oder Triglycidylether von Glycerin oder Polyglycidylether von Polyglycerin enthält.

3. Aramidcord nach Anspruch 1 oder 2, bei dem die Beschichtung, die an Gummi und gummiartigen Materialien haftet und sich von der aushärtbaren Epoxidverbindung unterscheidet, eine Resorcin-Formaldehyd-Latex- (RFL-) Beschichtung ist.

4. Faserverstärkter Körper, der den Cord nach einem der Ansprüche 1 bis 3 umfasst.

5. Faserverstärkter Körper nach Anspruch 4, wobei es sich bei dem Körper um einen Reifen handelt.

## Revendications

1. Corde d'aramide ayant une résistance élevée à la fatigue produit à partir d'un fil d'aramide multifilamentaire, obtenue par les étapes comprenant :
a) le filage d'une solution d'un polyamide aromatique dans un bain de coagulation ;
b) en option, la neutralisation et le lavage du fil multifilamentaire obtenu ;
c) le traitement du fil en ligne avec un composé époxy durcissable, en option avec ou avant un traitement du fil avec au moins un agent durcissant alcalin ;
d) l'obtention d'un fil ayant une teneur en époxyde libre inférieure à 10 mmoles/kg ;
e) la conversion du fil en corde, la corde étant obtenue en tordant ensemble des faisceaux du fil, qui sont tous des fils de l'étape d) ;
f) le traitement de la corde avec un composé époxy durcissable ; suivi de
g) le traitement de la corde avec un revêtement qui est adhésif sur un caoutchouc et des matériaux de type caoutchouc et différent du composé époxy durcissable.

2. Corde d'aramide de la revendication 1, dans laquelle le composé époxy durcissable comprend un éther di- et/ou triglycidylique de glycérol ou l'éther polyglycidylique de polyglycérol.

3. Corde d'aramide de la revendication 1 ou 2, dans laquelle le revêtement qui est adhésif sur le caoutchouc et les matériaux de type caoutchouc et différent du composé époxy durcissable est un revêtement de résorcinol-formaldéhyde-latex (RFL).

4. Objet renforcé de fibres comprenant la corde de l'une quelconque des revendications 1-3.

5. Objet renforcé de fibres de la revendication 4, l'objet étant un pneu.
